# EUROPEAN PATENT APPLICATION

(11) **EP 4 535 919 A1**
(43) Date of publication of application: **09.04.2025**
(21) Application number: 23815247.4
(22) Date of filing: 31.05.2023
(51) Int. Cl.: H04W 76/27

(54) **METHOD EXECUTED BY USER EQUIPMENT, AND USER EQUIPMENT**

(30) Priority: 01.06.2022 CN 202210627035
(71) Applicant: Sharp Kabushiki Kaisha, Sakai City, Osaka 590-8522 (JP)
(72) Inventor: LIU, Renmao, Pudong, Shanghai 201206 (CN); ZHANG, Chongming, Pudong, Shanghai 201206 (CN)
(74) Representative: Müller Hoffmann & Partner
(86) International application number: PCT/CN2023/097407
(87) International publication number: WO 2023/232070

(57) **Abstract**

The present invention provides a method performed by user equipment, and user equipment. The method is a processing method performed during communication performed between the user equipment (UE) and a base station on the basis of a multi-path communication mode, and includes the following steps: the UE receiving an RRC message from the base station, the message carrying information used to instruct the UE to establish an indirect connection for communicating with the base station via a relay UE, and the message also carrying identity information of the relay UE; and the UE, on receiving the RRC message, setting the relay UE corresponding to the identity information of the relay UE carried therein as a target relay UE, and establishing a side link (SL) connection or a PC5 connection with the relay UE.

## Description

### TECHNICAL FIELD

The present invention relates to the technical field of wireless communications. More specifically, the present invention relates to a method performed by user equipment, and corresponding user equipment.

### BACKGROUND

In a cell covered by a base station, user equipment (UE) can directly communicate with the base station, and such a communication connection is called a direct connection. The UE may also be in communication connection with the base station via relay UE, and such a connection may be referred to as an indirect connection. In a scenario in which the UE communicates with the base station by means of the relay UE, the UE is called remote UE.

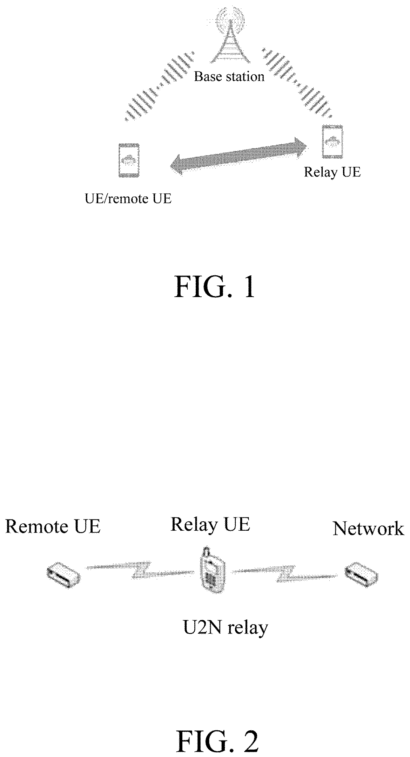

In order to improve uplink and downlink transmission rates and throughput of the UE, the UE may simultaneously operate in a direct connection mode and an indirect connection mode. As shown in FIG. 1, in such an operating mode, the UE and the base station communicate with each other via different paths, so that the operating mode may also be referred to as a multi-path communication mode.

In FIG. 1, a wireless communication mode is typically adopted between remote UE and a base station and between relay UE and the base station, for example, communication techniques and means such as 5G NR or LTE. Moreover, the remote UE and the relay UE may communicate with each other on the basis of a sidelink communication mode, or a Wi-Fi communication mode based on hotspot coverage, or a wired connection mode.

In the relay-mediated multi-path operating mode, a serving cell of the relay UE may change, resulting in that user data cannot reach the base station accurately, and how to ensure correct transmission when such a situation occurs is a problem to be solved.

### SUMMARY

In order to solve the above problem, the present invention provides a method performed by user equipment and user equipment. In a relay-mediated multi-path operating mode, even if a serving cell of relay UE may change, correct transmission can be ensured, such that user data can accurately reach a base station.

According to an aspect of the present invention, provided is a method performed by user equipment, the method being a processing method performed during communication performed between user equipment (UE) and a base station on the basis of a multi-path communication mode, comprising the following steps:
Receiving, by the UE, an RRC message from the base station, the message carrying information used to instruct the UE to establish an indirect connection for communicating with the base station via relay UE, and the message also carrying identity information of the relay UE; and
On receiving the RRC message, setting, by the UE, the relay UE corresponding to the identity information of the relay UE carried therein as a target relay UE, and establishing a sidelink (SL) connection or a PC5 connection with the relay UE.

The foregoing method performed by user equipment, preferably, further comprises the following steps:
Receiving, by the UE, an RRC reconfiguration message from the base station, the message comprising a UE identity of the relay UE and connection path addition configuration information; and
On receiving the RRC reconfiguration message, starting, by the UE, a timer for managing the connection path addition, and starting establishment of a connection with the relay UE.

The foregoing method performed by user equipment, preferably, further comprises the following step:
In the process of establishing a connection with the relay UE, or during the operation of the timer, initiating, by the UE, a failure information reporting procedure if the serving cell of the relay UE changes.

In the procedure, the UE generates a failure information message, information of a path addition failure or an indirect connection establishment failure being indicated in the message, and that the serving cell of the relay UE changes is the cause for the addition failure being indicated in the message , or that the serving cell of the relay UE changes being indicated in the message.

The foregoing method performed by user equipment, preferably, further comprises the following step:
When the relay UE informs the UE by means of a PC5 RRC message that cell selection, reselection or switching has occurred in the relay UE side, learning, by the UE, that the serving cell of the relay UE changes.

The foregoing method performed by user equipment, preferably, further comprises the following step:
When the UE receives a discovery message sent by the relay UE, and a physical cell identity carried in the message changes, learning, by the UE, that the serving cell of the relay UE changes.

The foregoing method performed by user equipment, preferably, further comprises the following step:
When the UE receives a system information block SIB1 sent by the relay UE, and a cell identity carried in the SIB 1 is different from a cell identity in an SIB1 previously received by the UE, learning, by the UE, that the serving cell of the relay UE changes.

The foregoing method performed by user equipment, preferably, further comprises the following step:
When a measurement report reported by the UE to the base station before receiving the RRC message from the base station comprises a first cell identity of the relay UE, but after receiving the RRC message from the base station, a cell identity learned from the discovery message or from the SIB 1 is a second cell identity, and the first cell identity is different from the second cell identity, learning, by the UE, that the serving cell of the relay UE changes.

The foregoing method performed by user equipment, preferably, further comprises the following step:
When the UE is in a multi-path operating state and one of the paths is a path connected to the base station via the relay UE, and if the UE learns that the serving cell of the relay UE changes, performing, by the UE, at least one of the following operations:
The UE suspending all radio bearers transmitted via a relay path;
The UE initiating a failure information reporting procedure, the UE generating a failure information message in the procedure, and that the serving cell of the relay UE changes being indicated in the message; and
The UE performing a sidelink UE information reporting procedure, wherein the UE sends a sidelink UE information message to the base station in the procedure, and at least a destination identity used by the relay UE in the actual SL connection or PC5 connection is carried in the message.

The foregoing method performed by user equipment, preferably, further comprises the following steps:
When the UE learns that the serving cell of the relay UE changes, further determining, by the UE, whether SRB 1 is located on an indirect connection, and further determining whether split SRB 1 is configured;
If SRB 1 is not located on the indirect connection and the UE is not configured with split SRB 1, initiating, by the UE, an RRC connection re-establishment procedure; and
If SRB 1 is located on the indirect connection or the UE is configured with split SRB1, performing, by the UE, at least one of the above operations.

According to another aspect of the present invention, user equipment is provided, comprising:
A processor; and
A memory, having instructions stored therein,
The instructions, when run by the processor, performing the method described above.

According to the method performed by user equipment and the corresponding user equipment provided by the present invention, even if the serving cell of the relay UE changes in a relay-mediated multi-path operating mode, it can be ensured that user data can accurately reach the base station.

### BRIEF DESCRIPTION OF THE DRAWINGS

FIG. 1 is a schematic diagram showing an operating mode (multi-path) in which a direct connection and an indirect connection are parallel, i.e., a multi-path communication mode.
FIG. 2 is a schematic diagram showing UE-to-network relay.
FIG. 3 is a schematic diagram showing protocol layer structures of an SRB and a split SRB.
FIG. 4 is a flowchart showing a method performed by user equipment (UE) according to an embodiment of the present invention.
FIG. 5 is a simplified structural block diagram of user equipment according to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment;
NR; New Radio;
LTE: Long Term Evolution;
eLTE: enhanced Long Term Evolution;
RRC: Radio Resource Control;
MAC: Medium Access Control (layer);
MAC CE: MAC Control Element;
SDAP: Service Data Adaptation Protocol;
SRAP: Sidelink Relay Adaptation Protocol;
RLC: Radio Link Control;
PDCP: Packet Data Convergence Protocol;
ADAPT: adaptation layer;
PHY: physical layer;
RB: radio bearer;
DRB: Data Radio Bearer;
SRB: Signaling Radio Bearer;
PDU: Protocol Data Unit;
SDU: Service Data Unit;
V2X: Vehicle-to-Everything.

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type.

In the present invention, sidelink and PC5 may be used interchangeably, and an RLC channel, an RLC entity, and an RLC bearer may be used interchangeably. In addition, PC5 is used for relay operations herein, and can therefore also be replaced with relay.

Hereinafter, a description will be given of related art of the present invention.

### Multi-path Communication

As shown in FIG. 1, UE and a base station may communicate with each other via a direct connection and an indirect connection. The UE may be configured to simultaneously operate in a communication mode of a direct connection and an indirect connection, and such a communication mode may be referred to as multi-path communication. A direct connection path may be referred to as a direct path, and an indirect connection path may be referred to as a relay path or an indirect path.

The direct connection and the direct path are interchangeable herein. The indirect connection, the relay path, and the indirect path are interchangeable.

Multi-path communication may also be replaced herein with multi-connection communication.

### Proximity services (ProSe) Communication Between UE (UE to UE, U2U communication)

A UE and a UE may be wirelessly connected to each other by using a proximity services communication means, so as to achieve transmission of data or signaling. The near field communication means mentioned herein primarily refers to a sidelink connection, or a Wi-Fi connection, or another connection means. A sidelink connection-based reference point between a UE unit and a UE unit is referred to as PC5, and therefore a sidelink-based connection between the UE may be referred to as a PC5 connection. Sidelink connection and PC5 connection are interchangeable herein. Such a PC5 connection may be identified by a pair of Layer-2 identities (IDs) typically including a source Layer-2 ID and a destination Layer-2 ID. Such a PC5 connection may be simply referred to as a PC5 connection, a sidelink connection, or the like for or corresponding to a certain destination.

### Sidelink Radio Link Failure (SL RLF)

In the following scenario, UE may determine that a radio link failure has occurred on a sidelink connection for a specific destination:
Upon reception of an indication from a sidelink RLC entity that the maximum number of retransmissions for a specific destination has been reached;
Upon T400 expiry for a specific destination;
Upon indication from MAC entity that the maximum number of consecutive HARQ DTX for a specific destination has been reached;
Upon integrity check failure indication from a sidelink PDCP entity concerning SL-SRB for a specific destination.

In a sidelink connection or a PC5 connection, one specific destination corresponds to one PC5 connection, therefore it can be considered that an SL RLF has occurred on a sidelink connection or a PC5 connection corresponding to the address.

### UE-to-Network Relay (U2N relay)

As shown in FIG. 2, the left side is remote UE, the middle is relay UE, and the right side is a network. The remote UE and the relay UE may be connected to each other via the aforementioned PC5 interface, or Wi-Fi, or another connection means. The PC5 connection is mainly used as an example herein. The relay UE and the network may be connected via a Uu interface. The relay UE relays and forwards signaling and data between the remote UE and the network/base station.

### Uu interface

A wireless communication interface between UE and a base station. The UE may communicate with eNB over the Uu interface by using an E-UTRAN. The UE may also communicate with gNB over the Uu interface by using NR.

### Uu Radio Link Failure (Uu RLF)

The UE may determine that a radio link failure is detected at the Uu interface in the following cases:
- a random access problem indication is received from MAC (upon random access problem indication);
- an indication that the maximum number of retransmissions has been reached is received from RLC (upon indication from RLC that the maximum number of retransmissions has been reached); and
- a timer T310 or T312 related to radio link detection expires (upon T310/T312 expiry).

### RRC Connection Re-establishment

In order to resume communication with the base station or the network side, the UE in the connected state needs to re-establish the RRC connection. To achieve the foregoing purpose, the UE performs an RRC connection re-establishment procedure. During initiation of the foregoing procedure, the UE starts a timer T311 for management of the connection resume procedure.

### Timer T304

In the prior art, when the UE receives an RRC connection reconfiguration message from the base station, and the message instructs the UE to perform reconfiguration with sync or a handover/switch, the UE starts the timer T304 to manage the synchronization procedure. If the reconfiguration with sync is successfully completed, the UE stops T304. If T304 expires, this means that the reconfiguration with sync procedure fails, and the UE triggers the RRC connection re-establishment procedure in which the UE transmits an RRC re-establishment request (RRCReestablishmentRequest) message to the base station.

### Signal Radio Bearer (SRB) and Split SRB

During communication between the UE and the base station, the SRB is used to bear signaling. The UE, by means of a Uu PDCP layer, encapsulates data of messages to the network such as air interface RRC connection setup, re-establishment, resume, etc., and then submits same to a Uu RLC entity to be further encapsulated, borne on a Uu RLC channel, and submitted downwards layer by layer via Uu-MAC and Uu-PHY. Conversely, an RRC message transmitted by the network to the UE also arrives at the UE via the SRB. Such an SRB may be referred to as an SRB via a direct connection or an SRB via a direct path.

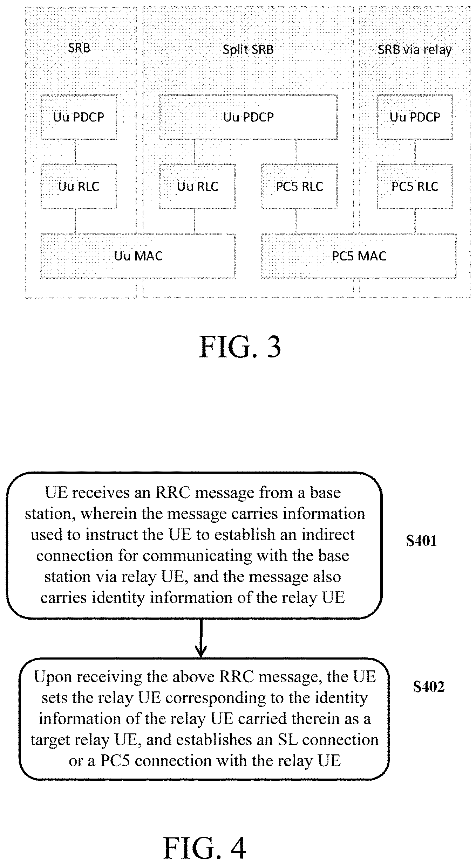

In the multi-path configuration, the UE may be configured with a split SRB, the protocol structure of which is as shown in FIG. 3. After the Uu PDCP layer encapsulates data, the UE may submit the encapsulated data to Uu RLC or PC5 RLC as required. If the data is submitted to Uu RLC, processing is the same as that in the case of the SRB. If the data is submitted to PC5 RLC, the data is borne on a PC5 RLC channel after further encapsulation, submitted downwards layer by layer via PC5-MAC and PC5-PHY, and finally transmitted to the base station/network via a relay path. If the data is submitted to Uu RLC, as in the case of the SRB, the data is finally transmitted to the base station/network via a direct path. Such a split SRB may be referred to as a split SRB via multi-path or split SRB via relay.

In the multi-path configuration, the UE may be further configured with an SRB via relay, the protocol structure of which is as shown in FIG. 3. After the Uu PDCP layer encapsulates data, the encapsulated data is submitted to a PC5 RLC entity to be further encapsulated, borne on a PC5 RLC channel, submitted downwards layer by layer via PC5 MAC and PC5 PHY, transmitted to the relay UE, and then forwarded to the network/base station. Conversely, an RRC message transmitted by the network to the UE may also arrive at the UE via an SRB via relay via the relay UE. Such an SRB via relay may also be referred to as an SRB via a relay path or an SRB via an indirect connection.

According to contents that are borne, signal radio bearers (SRBs) may be divided into the following types:
SRB0: used to bear an RRC message transmitted using a logical channel of a common control channel (CCCH).

SRB1: used to bear an RRC message and a non-access stratum message (NAS) transmitted using a logical channel corresponding to a dedicated control channel (DCCH).

SRB2: a non-access stratum (NAS) message and an RRC message carrying measurement information transmitted using a logical channel corresponding to a dedicated control channel.

The method of the present invention is described below with reference to FIG. 4.

FIG. 4 is a flowchart of a processing method performed by UE according to an embodiment of the present invention.

Specific embodiments are provided below to describe a processing method of the present invention.

### Embodiment 1

In the present embodiment, provided is a processing method performed during communication performed between UE and a base station on the basis of a multi-path communication mode, as shown in FIG. 4, including the following steps:
S401: Receiving, by the UE, an RRC message from the base station, the message carrying information used to instruct the UE to establish an indirect connection for communicating with the base station via relay UE, wherein, preferably, the message further carries identity information of the relay UE, for example, a UE identity of the relay UE, so that the UE can identify the relay UE;
S402: When receiving the RRC message, setting the relay UE corresponding to the identity information, for example, the UE identity of the relay UE carried therein, as a target relay UE, and establishing an SL connection or a PC5 connection with the relay UE, wherein for example, the UE may indicate to an upper layer above a UE RRC layer to trigger the establishment of a PC5 connection with the relay UE. Preferably, the UE may start a timer.

Specifically, the UE receives an RRC message, e.g., an RRC reconfiguration message, from the base station. The message may carry information for instructing the UE to establish an indirect connection. For example, the message includes information about the relay UE used for the indirect connection, includes at least a UE identity, e.g., an L2 ID, of the relay UE, and for example, may further include connection path addition configuration information. On the basis of the configuration information, the UE may establish a path for the indirect connection, etc.

Upon receiving the above message, the UE may start a timer T-path addition for managing connection path addition. The timer is located on the UE side. A value of the duration of the timer may also be carried in the above message. That is, the UE may set the timer T-path addition according to the value of the duration of T-path addition carried in the above message, and start the timer T-path addition.

Upon receiving the above message, the UE initiates establishment of a connection with the relay UE. Establishment of a PC5 connection is used herein as an example. The UE establishes a PC5 connection with the relay UE. However, as described above, a sidelink connection and a PC5 connection are interchangeable herein. That is, a sidelink connection is also applicable. The UE may also establish a connection with the relay UE via Wi-Fi. For example, the UE may indicate to an upper layer above a UE RRC layer to trigger establishment of a PC5 connection with the relay UE.

In the process of establishing a connection or during the operation of the timer, the UE may initiate the failure information procedure if the serving cell of the relay UE changes. In the procedure, the UE generates a failure information message; the message may be an RRC message, and alternatively, information such as a path addition failure or an indirect connection establishment failure is indicated in the message. In addition, the UE submits the message to a lower layer below the RRC layer for transmission, so as to transmit same to the base station. Preferably, that the serving cell of the relay UE changes being the cause for the addition failure may be further indicated in the message, or that the serving cell of the relay UE changes may be indicated in the message.

Alternatively, the UE may generate a specific RRC message used to report a path addition failure or to indicate indirect connection establishment failure information, and submit the message to a lower layer for transmission to transmit the same to the base station.

Alternatively, the UE may stop the timer T-path addition.

When the UE communicates with the base station via the relay UE, the UE is referred to as remote UE.

### Embodiment 2

The UE may learn that the serving cell of the relay UE changes, as mentioned in Embodiment 1, by the following modes:
Mode 1: The relay UE informs the UE by means of a PC5 RRC message that cell selection or reselection has occurred in the relay UE side, or informs the UE that switching has occurred in the relay UE side.
Mode 2: The UE receives a discovery message sent by the relay UE, a physical cell identity (PCI) carried in the message has changed, and the changed PCI is different from a PCI in the discovery message previously received by the UE. Moreover, such a change occurs after the UE receives the RRC message from the base station described in Embodiment 1.
Mode 3: The UE receives a system information block1 (SIB1) sent by the relay UE to the UE, and a cell identity carried in the SIB 1 is different from a cell identity in an SIB1 previously received by the UE. Here, the SIB1 previously received by the UE may be obtained before the UE receives the RRC message from the base station described in Embodiment 1.
Mode 4: The measurement report reported by the UE to the base station before receiving the RRC message from the base station described in Embodiment 1 includes a cell identity 1 of the relay UE, but after receiving the RRC message from the base station described in Embodiment 1, the cell identity learned from the discovery message or the SIB1 sent by the relay UE is a cell identity 2, and the cell identity 1 and the cell identity 2 are different, such that the UE determines that the serving cell of the relay UE changes.
Mode 5: When the RRC message received by the UE from the base station as described in Embodiment 1 further includes information of the serving cell of the relay UE, which may be one serving cell or multiple serving cells, after the RRC message from the base station mentioned in Embodiment 1 is received, if the serving cell of the relay UE changes and is different from the aforementioned one or more serving cells, it is considered that the serving cell of the relay UE changes. The UE may obtain the information of the serving cell of the relay UE via the aforementioned SIB1 or the discovery message.

### Embodiment 3

In Embodiment 1, the UE learns that the serving cell of the relay UE changes during the operation of the timer or during the establishment of a connection with the relay UE, so as to perform a corresponding operation.

In addition, there is a possibility that, when the UE is in a multi-path operating state, one of the paths is connected to the base station via the relay UE, and if the UE learns that the serving cell of the relay UE changes, one or more of the following operations may be performed:
Operation 1: The UE suspends all radio bearers transmitted via a relay path, which may include a signaling radio bearer or a data bearer. Alternatively, transmission of the signaling bearers via the relay path is suspended.
Operation 2: The UE may initiate the failure information procedure. The UE may consider that when the serving cell of the relay UE changes, and the path via the relay UE fails in the procedure, the UE generates a failure information message. Alternatively, information such as occurrence of an SL-RLF on a link between the UE and the relay UE connected therewith, or occurrence of an indirect connection failure, or an indirect path failure is indicated in the message, and it can be directly indicated that the serving cell of the relay UE changes. In addition, the message is submitted to a lower layer for transmission, so as to be transmitted to the base station.
Operation 3: The remote UE may also perform a sidelink UE information reporting procedure (sidelink UE information for NR sidelink communication procedure), and transmit a sidelink UE information message to the base station/network side. The message includes a sidelink failure report list (sl-failure list), and a sidelink destination identity (sl-Destination Identity) therein is set to a relay UE identity carried in a broadcast message by the relay UE, or is set to a relay UE identity received by the remote UE and carried in an RRC reconfiguration message. The RRC reconfiguration message is the RRC message mentioned in Embodiment 1 and carrying the path addition configuration information.

In the transmitted sidelink UE information message, the remote UE may also set the sidelink destination identity (sl-DestinationIdentity) to an address identity configured by an upper layer and used for sidelink transmission, and add indication information indicating that the address identity corresponds to relay UE and preferably corresponds to U2N relay UE in multi-path. For example, an IE relay is set. When the destination identity corresponds to relay UE, the value of the IE relay is set to true or "1". When the destination identity does not correspond to the relay UE, the IE relay is not carried, or the value of the IE relay is set to false or "0".

Preferably, in order to enable the base station to identify that the destination identity reported in the above sidelink UE information message corresponds to relay UE, the remote UE may also initiate a sidelink UE information reporting procedure (sidelink UE information for NR sidelink communication procedure) when a PC5 connection between the remote UE and the relay UE is successfully established, and transmit a sidelink UE information message to the base station/network side. The message carries at least a destination identity used by the relay UE in an actual PC5 connection. Specifically, IE relayinfor may be carried, and the IE includes at least two address identities:
One is a relay UE identity carried in a broadcast message by the relay UE or a relay UE identity received by the remote UE and carried in an RRC reconfiguration message, and the other is an address identity configured by an upper layer and used for sidelink transmission, the sidelink here being the sidelink mentioned herein and used by the remote UE to perform non-indirect connection.

On the basis of the above method, when performing operation 3, the remote UE may set the sidelink destination identity (sl-DestinationIdentity) therein to be an address identity configured by an upper layer and used for sidelink transmission. Since it is indicated in IE relayinfor reported by the remote UE that the destination identity corresponds to a relay UE identity, the base station may indirectly learn that the address identity of the sidelink transmission corresponds to relay UE and preferably corresponds to U2N relay UE in multi-path.

In addition to operation 1, the UE may perform only operation 2 or operation 3, or may perform both operation 2 and operation 3, and the effect of the performing is not affected.

In addition, this embodiment may also be implemented separately to report that the UE detects that the serving cell of the relay UE connected thereto changes in the multi-path operating mode.

### Embodiment 4

Based on Embodiment 3, when the remote UE detects that the serving cell of the relay UE changes, the UE may further determine whether SRB 1 via relay is configured (or determine whether the SRB1 is located on an indirect connection), and further determine whether split SRB 1 is configured.

If the UE is not configured with SRB 1 via relay (or SRB 1 is not located on the indirect connection), and is not configured with split SRB1, the UE initiates an RRC connection re-establishment procedure.

If the UE is configured with the SRB1 via relay (or SRB 1 is located on the indirect connection), or the UE is configured with split SRB1, the UE may perform one or more of the operations in Embodiment 3.

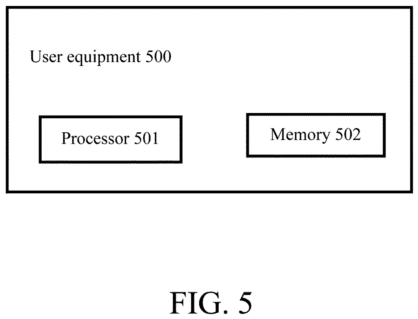

FIG. 5 is a simplified structural block diagram of user equipment according to the present invention.

As shown in FIG. 5, the user equipment 500 includes at least a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memory systems, etc. The memory 502 has program instructions stored thereon. When the instructions are run by the processor 501, one or several steps in the processing method for UE of the present disclosure can be performed.

The method and related equipment according to the present disclosure have been described above in conjunction with preferred embodiments. It should be understood by those skilled in the art that the method shown above is only exemplary, and the above embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. A person skilled in the art could make various alterations and modifications according to the teachings of the illustrated embodiments.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. **In** addition, various modifications can be made to the present invention within the scope of the claims. Embodiments resulting from appropriate combination of the technical means disclosed in the different embodiments are also included within the technical scope of the present invention. **In** addition, components with the same effect described in the above embodiments may be replaced with one another.

## Claims

1. A method performed by user equipment, the method being a processing method performed during communication performed between the user equipment (UE) and a base station on the basis of a multi-path communication mode, comprising the following steps:
receiving, by the UE, an RRC message from the base station, the message carrying information used to instruct the UE to establish an indirect connection for communicating with the base station via relay UE, and the message also carrying identity information of the relay UE; and
on receiving the RRC message, setting, by the UE, the relay UE corresponding to the identity information of the relay UE carried therein as a target relay UE, and establishing a sidelink (SL) connection or a PC5 connection with the relay UE.

2. The method performed by user equipment according to claim 1, further comprising the following steps:
receiving, by the UE, an RRC reconfiguration message from the base station, the message comprising a UE identity of the relay UE and connection path addition configuration information; and
on receiving the RRC reconfiguration message, starting, by the UE, a timer for managing the connection path addition, and starting establishment of a connection with the relay UE.

3. The method performed by user equipment according to claim 2, further comprising the following step:
in the process of establishing a connection with the relay UE, or during the operation of the timer, initiating, by the UE, a failure information reporting procedure if a serving cell of the relay UE changes, wherein
in the procedure, the UE generates a failure information message, information of a path addition failure or an indirect connection establishment failure being indicated in the message, and that the serving cell of the relay UE changes is the cause for the addition failure being indicated in the message, or that the serving cell of the relay UE changes being indicated in the message.

4. The method performed by user equipment according to claim 3, further comprising the following step:
when the relay UE informs the UE by means of a PC5 RRC message that cell selection, reselection or switching has occurred in the relay UE side, learning, by the UE, that the serving cell of the relay UE changes.

5. The method performed by user equipment according to claim 3, further comprising the following step:
when the UE receives a discovery message sent by the relay UE, and a physical cell identity carried in the message changes, learning, by the UE, that the serving cell of the relay UE changes.

6. The method performed by user equipment according to claim 3, further comprising the following step:
when the UE receives a system information block SIB1 sent by the relay UE, and a cell identity carried in the SIB 1 is different from a cell identity in an SIB1 previously received by the UE, learning, by the UE, that the serving cell of the relay UE changes.

7. The method performed by user equipment according to claim 5 or 6, further comprising the following step:
when a measurement report reported by the UE to the base station before receiving the RRC message from the base station comprises a first cell identity of the relay UE, but after receiving the RRC message from the base station, a cell identity learned from the discovery message or the SIB 1 is a second cell identity, and the first cell identity is different from the second cell identity, learning, by the UE, that the serving cell of the relay UE changes.

8. The method performed by user equipment according to claim 3, further comprising the following step:
when the UE is in a multi-path operating state and one of the paths is a path connected to the base station via the relay UE, and if the UE learns that the serving cell of the relay UE changes, performing, by the UE, at least one of the following operations:
the UE suspending all radio bearers transmitted via a relay path;
the UE initiating a failure information reporting procedure, the UE generating a failure information message in the procedure, and that the serving cell of the relay UE changes being indicated in the message; and
the UE performing a sidelink UE information reporting procedure, wherein the UE sends a sidelink UE information message to the base station in the procedure, and at least a destination identity used by the relay UE in the actual SL connection or PC5 connection is carried in the message.

9. The method performed by user equipment according to claim 8, further comprising the following steps:
when the UE learns that the serving cell of the relay UE changes, further determining, by the UE, whether SRB 1 is located on the indirect connection, and further determining whether split SRB 1 is configured;
if SRB 1 is not located on the indirect connection and the UE is not configured with split SRB 1, initiating, by the UE, an RRC connection re-establishment procedure; and
if SRB 1 is located on the indirect connection or the UE is configured with split SRB 1, performing, by the UE, at least one of the above operations.

10. User equipment, comprising:
a processor; and
a memory, having instructions stored therein,
wherein the instructions, when run by the processor, perform the method according to any one of claims 1 to 9.
